(19) **Europäisches Patentamt / European Patent Office / Office européen des brevets**

(11) **EP 2 687 465 B1**

(12) **EUROPÄISCHE PATENTSCHRIFT**

(45) Veröffentlichungstag und Bekanntmachung des Hinweises auf die Patenterteilung:
**06.05.2015  Patentblatt 2015/19**

(51) Int Cl.:
*B65G 23/06* (2006.01)        *F16H 55/17* (2006.01)

(21) Anmeldenummer: **12380036.9**

(22) Anmeldetag: **17.07.2012**

(54) **Förderrolle mit Profil**

Rouleau de transport avec profil

Transport roller with profile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.01.2014  Patentblatt 2014/04**

(73) Patentinhaber: **Interroll Holding AG**
**6592 San' Antonino (CH)**

(72) Erfinder: **Uttrup, Peter**
**08850 Gava (ES)**

(74) Vertreter: **Müller-Boré & Partner**
**Patentanwälte PartG mbB**
**Friedenheimer Brücke 21**
**80639 München (DE)**

(56) Entgegenhaltungen:
**EP-A1- 1 816 091        EP-A1- 2 065 318**
**EP-A2- 1 983 222        WO-A1-2004/009476**
**WO-A2-2005/009874    US-A1- 2004 089 519**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Antriebsrolle für einen Förderbandgurt sowie ein Förderband mit einer Antriebsrolle.

Antriebsrollen werden in Förderbandanlagen dazu verwendet, einen Gurt bzw. Förderbandgurt anzutreiben, auf dem Gegenstände transportiert werden. Dazu überträgt die Antriebsrolle ihr Drehmoment auf den über die Antriebsrolle verlaufenden Förderbandgurt, der über die Antriebsrolle reibschlüssig gespannt ist.

Das Dokument EP 1 983 222 A2 betrifft eine Zahnradanordnung für Fördergurte bzw. Förderketten. Eine modulare Zahnradanordnung weist ein Zahnrad aus zwei Zahnradhälften auf. Die beiden Zahnradhälften können miteinander verbunden werden und so zu einem Zahnrad zusammengesetzt werden. Die Zahnradhälften sind aus einem thermoplastischen Polyurethan oder Polyester ausgebildet und dienen zum Antrieb eines Fördergurts oder einer Förderkette.

Weiterhin betreffen Dokumente EP 2 065 318 A1, US 2004/089519 A1 und WO 2005/009874 A2 Zahnräder für Fördergurte in verschiedenen Ausgestaltungen.

Dokument EP 1 816 091 betrifft eine Förderanlage mit einem Antriebsrad und einem Spannrad für einen thermoplastischen Gurt. Zusätzlich ist eine Rolle vorgesehen, deren Gewicht zum Spannen des thermoplastischen Gurts dient.

Dokument WO 2004/009476 betrifft eine Fördereinrichtung mit einem Antriebsrad zum Materialtransport. Ein Zahnriemen läuft so um das Antriebsrad, dass Vorsprünge an der inneren Riemenfläche in Aufnahmen des Antriebsrads eingreifen. Eine Mehrzahl Rollen stützen den Zahnriemen ab.

Als ein anderes Antriebssystem für einen Förderbandgurt sind weiterhin Förderbandgurte mit einem speziell gestalteten Profil auf der Innenseite zum formschlüssigen Kraftübertrag bekannt. Die Förderbandgurte weisen nach Innen weisende Eingriffelemente wie Noppen und/oder Rippen auf, die von speziellen Zahnrädern angetrieben werden. Dabei umläuft ein so profilierter Förderbandgurt eine Mehrzahl von in Achsrichtung parallel zueinander angeordneten Zahnrädern. Die Zahnräder weisen Eingriffsabschnitte auf, die auf die spezielle Profilierung der Eingriffeelemente des Förderbandgurtes abgestimmt sind.

Der Erfindung liegt die Aufgabe zu Grunde, eine universell einsetzbare Antriebsvorrichtung für Förderbänder bereitzustellen.

Diese Aufgabe wird durch die Gegenstände der unabhängigen Ansprüche gelöst.

Ein Aspekt der Erfindung betrifft eine Antriebsrolle für ein Förderband mit einem Profilmantel, in dem entlang der Achsrichtung der Antriebsrolle Zähne und Eingriffsabschnitte so ausgebildet sind, dass gilt:

$$\frac{D_A \cdot \pi}{N_z} = 52{,}0 \text{ mm} \pm 2 \text{ mm} .$$

Dabei bezeichnet $D_A$ den Außendurchmesser der Antriebsrolle mit Zähnen und $N_z$ die Anzahl der Zähne des Profilmantels.

Eine solche Antriebsrolle unterscheidet sich unter Anderem dadurch von einem Zahnrad, dass die Antriebsrolle im Wesentlichen zylinderförmig ausgebildet ist, wobei die Antriebsrolle in Achsrichtung des Zylinders länger ausgebildet ist als in Radialrichtung bzw. in Richtung des Zylinderdurchmessers. Eine Antriebsrolle kann insbesondere zumindest zweimal oder dreimal so lang in Achsrichtung ausgebildet sein wie breit in Radialrichtung. Die Antriebsrolle erstreckt sich in Achsrichtung.

Eine Antriebsrolle ist als eine angetriebene Rolle ausgebildet. Die Antriebsrolle kann einen Antrieb, z.B. einem Trommelmotor, umfassen. Der Antrieb kann die Antriebsrolle so antreiben, dass sich die Mantelfläche der Antriebsrolle um ihre Längsachse dreht. Zur Übertragung des Drehmoments der Antriebsrolle auf einen die Antriebsrolle zumindest teilweise umlaufenden Förderbandgurt weist die Antriebsrolle einen Profilmantel auf. Der Profilmantel ist im Bereich und entlang des Mantels der zylinderförmigen Antriebsrolle ausgebildet. Der Profilmantel weist Zähne und Eingriffsabschnitte auf, die sich in Achsrichtung der Antriebsrolle erstrecken und zum Übertragen der Kraft des Drehmoments der Antriebsrolle zum Antrieben eines Förderbandgurt ausgebildet sind. Die Zähne und Eingriffsabschnitte sind parallel zur Achsrichtung der Antriebsrolle ausgebildet.

Der Profilmantel kann entweder einstückig als Teil der Antriebsrolle ausgebildet sein, wobei die Antriebsrolle eine profilierte Zylindertrommel aufweist, oder als eigenes Bauteil ausgebildet sein, der im Zylindermantelbereich der Antriebsrolle angeordnet ist.

Förderbandgurte sind dazu ausgebildet, eine Mehrzahl von Rollen in einer Endlosschleife zu umlaufen. Die Innenseite eines solchen Förderbandgurtes weist dabei in Richtung zu den Rollen, die Außenseite des Förderbandgurts ist zum Transport von Gegenständen vorgesehen.

Wird ein profilierter Förderbandgurt um eine erfindungsgemäße Antriebsrolle angelegt, so können Eingriffelemente des profilierten Förderbandgurtes in die Eingriffsabschnitte der Antriebsrolle eingreifen. Die Zähne der Antriebsrolle übertragen beim Antreiben der Antriebsrolle deren Drehmoment auf die Profilierung des Förderbandgurtes und somit den Förderbandgurt selber.

Ein Art von Fördebandgurten mit Profilierung sind die sogenannten thermoplastischen, homogenen Gurte ("thermoplastic homogeneous belts"). Diese Art von Gurten bzw. Förderbandgurten wird - abhängig vom Hersteller - mit unterschiedlichsten Profilierungen produziert. Diese Gurte werden z.B. mit halbkreisförmigen Noppen oder quer zur Verlaufsrichtung des Gurtes augebildeten schienenartigen Fortsätzen als Eingriffelemente gefertigt. Zu der unterschiedlichen Form sind die Eingriffelemente dieser Förderbandgurte unterschiedlich voneinander beabstandet.

Damit ist normalerweise eine gesondert für diesen Förderbandgurt hergestelltes Zahnrad zu verwenden, um den jeweiligen Förderbandgurt anzutreiben. Ein Großteil der auf dem Markt befindlichen Förderbandgurte weist einen Zwischenabstand zwischen den Eingriffelementen in Laufrichtung des Förderbandgurtes von etwa einem oder zwei Zoll auf. Der Zwischenabstand ist dabei nicht ein Maß lediglich für den zwischen den Eingriffelementen befindlichen Platz, sondern ein Maß für die Breite des Eingriffsfreien Raums plus der Breite eines Eingriffelements. In anderen Worten ist der Zwischenabstand die Distanz in Transportrichtung von Eingriffelementsende bis zum benachbarten Eingriffelementsende. Der Zwischenabstand bezeichnet somit die Teilung der Antriebsrolle.

So stellt z.B. Intralox thermoplastische, homogene Gurte her, die einen Zwischenabstand ("pitch") zwischen den einzelnen Eingriffelementen von 1,96849 Zoll aufweisen. Andere von dieser Firma hergestellte Gurte weisen einen Zwischenabstand von 1,02361 Zoll auf. Mit "pitch" bzw. "Zwischenabstand" wird dabei diejenige Regelmäßigkeit bezeichnet, mit der die Eingriffelemente des profilierten Förderbandgurtes in Verlaufsrichtung gesehen voneinander ausgebildet sind. Die Verlaufsrichtung des Förderbandgurtes ist diejenige Richtung, in der der Förderbandgurt dazu ausgebildet und vorgesehen ist, Gegenstände zu transportieren.

Während Förderbandgurte von europäischen Herstellern im metrischen Maßabstand hergestellt werden (1,96849 Zoll entspricht ca. 50 mm), stellen amerikanische Herstellerfirmen zumeist Förderbandgurte mit einer zöllischen Bemaßung von genau einem oder zwei Zoll her.

Die erfindungsgemäße Antriebsrolle kann zum Antrieb einer Mehrzahl von verschiedenen Förderbandgurten verwendet werden, insbesondere sowohl für zöllische Teilungen als auch für metrische Teilungen. Die Zähne des Profilmantels der Antriebsrolle sind in etwa zwei Zoll voneinander beabstandet und können damit sowohl Förderbandgurte mit einem Zwischenabstand von ca. zwei Zoll antreiben, als auch Förderbandgurte mit einem Zwischenabstand von ca. einem Zoll. Bei Verwendung eines Förderbandgurtes mit einem Zwischenabstand von ca. einem Zoll können die Zähne des Profilmantels dann lediglich an jedem zweiten Eingriffelement des Förderbandgurtes ansetzen, um das Drehmoment der Antriebsrolle zum Antreiben des Förderbandgurts zu nutzen.

Eine solche zwei-Zoll-Beabstandung der Zähne des Profilmantels in Umfangsrichtung des Mantels der Antriebsrolle lässt sich mathematisch folgendermaßen formulieren:

$$\frac{D_A \bullet \pi}{N_z} = 52{,}0 \text{ mm} \pm 2 \text{ mm}.$$

Der Ausdruck $D_A$ multipliziert mit der Kreiszahl $\pi$ ist ein Maß für den Außenumfang der Antriebsrolle. Dabei bezeichnet $D_A$ den Außendurchmesser der Rolle einschließlich der Zahnlänge der einzelnen Zähne der Antriebsrolle, auch genannt Kopfkreisdurchmesser. Dieser Außenumfang der Antriebsrolle geteilt durch die Anzahl der Zähne der Antriebsrolle ist in etwa zwei Zoll, also 50,8 mm, groß ausgebildet.

Damit weist die Antriebsrolle den Vorteil auf, einen Großteil der auf dem Markt befindlichen Förderbandgurte antreiben zu können. So kann zum Beispiel bei einem Defekt des Förderbandgurtes dieser leichter ausgetauscht werden, da nicht ein ganz spezieller Typ Förderbandgurt eines ganz bestimmten Herstellers besorgt werden muss, sondern beinahe jeglicher profilierter Förderbandgurt verwendet werden kann.

Dabei ist eine Teilung von ca. 51,5 mm für die Antriebsrolle besonders bevorzugt. Diese spezielle Teilung ist ein wenig größer ausgebildet als die Teilung der herkömmlichen Förderbandgurte. Dadurch wird eine Umsetzung des Drehmoments der Antriebsrolle zum Antrieb eines Förderbandgurts an einem Führungszahn der Antriebsrolle ermöglicht und gleichzeitig ausreichend Spiel für Verformungen bereitgestellt.

Ein Ausführungsbeispiel betrifft eine Antriebsrolle, bei der die Zähne und die Eingriffsabschnitte im Wesentlichen entlang der gesamten Mantellänge der Antriebsrolle ausgebildet sind. Damit ist die Übertragung des Drehmoments der Antriebsrolle unabhängig von der genauen Lage der Eingriffelemente des Förderbandgurtes in Gurtquerrichtung. Z.B. müssen Zahnräder zum Antreiben von Förderbandgurten mit Noppen (in Achsrichtung) exakt ausgerichtet sein, um die Noppen des Gurtes zum Antrieb zu umgreifen. Die Antriebsrolle weist Zähne und Eingriffsabschnitte auf, die sich kontinuierlich über die Länge der Antriebsrolle in Achsrichtung erstrecken, also im Wesentlichen entlang des gesamten Mantels. Dadurch wird die universelle Einsetzbarkeit der Antriebsrolle erhöht.

Gemäß einem Ausführungsbeispiel weisen die Zähne der Antriebsrolle Zahnflanken auf, die zum Übertragen eines Drehmoments der Antriebsrolle auf in den Eingriffsabschnitten angeordnete Eingriffelemente ausgebildet sind. Die Oberfläche der Zahnflanken können dabei in einer Ebene liegen. Die Eingriffelemente können Eingriffelemente eines Förderbandgurtes sein. Damit wird das Drehmoment der Antriebsrolle effektiv zum Antreiben des Förderbandgurtes in Verlaufsrichtung des Förderbandgurtes angetrieben.

Ein Ausführungsbeispiel betrifft eine Antriebsrolle, bei der das Material des Profilmantels gegenüber dem Material des Förderbandgurts einen geringen Reibungskoeffizienten aufweist. Dabei ist mit dem Reibungskoeffizienten der Gleitreibungskoeffizient $\mu$ gemeint. Ein geringer Reibungskoeffizient bedeutet, dass der Reibungskoeffizient kleiner als 0,2 beträgt. Die meisten Förderbandgurte werden aus PUR (Polyurethane) oder PE (Polyester) hergestellt. Für solche Förderbandgurte weist z.B. ein Profilmantel der Antriebsrolle aus PUR einen geringen Reibungskoeffizienten auf. Das Material des Profilmantels ist deswegen auf das Material des Förderbandgurtes abgestimmt, damit der Förderbandgurt beim Antrieb durch die Antriebsrolle glatt und geschmeidig angetrieben werden kann. Die Teilung der Antriebsrolle, also der Zwischenabstand zwischen den Zahnflanken des Profilmantels, ist für eine Mehrzahl Förderbandgurte ausgelegt. Dazu kann die Teilung des Profilmantels etwas größer als die Teilung des Förderbandgurts ausgebildet sein. Damit erfolgt der Kraftübertrag an jeweils nur einem Zahn des Profilmantels. Trennt sich der antreibende Zahn am Ende seines Umlaufs vom Förderbandgurt, so gleitet der Förderbandgurt bis zum Anschlag an den nachfolgenden Zahn, der daraufhin als nächster das Drehmoment der Antriebsrolle zum Antrieb des Förderbandgurts umsetzt. Ein geringer Reibungskoeffizient macht diese Gleitbewegung des Förderbandgurts zum nachfolgenden Zahn der Antriebsrolle geschmeidig.

Die Erfindung betrifft eine Antriebsrolle, bei der die mittlere Breite der Zähne schmäler ausgebildet ist als die mittlere Breite der Eingriffsabschnitte. Die Antriebsrolle weist damit zwischen den einzelnen Zähnen genug Freiraum auf, um sowohl Eingriffelemente eines Förderbandes mit einem Pitch von zwei Zoll aufzunehmen, als auch dazwischen angeordnete Eingriffelemente von einem Förderband mit einem engen ein-Zoll-Pitch. Bei solchen engen Förderbandgurten weist jeder zweite Eingriffelement in den Eingriffsabschnitt der Antriebsrolle, ohne an einer Zahnflanke eines der Zähne des Profilmantels der Antriebsrolle anzuliegen. Eine solche "offene" Anordnung der Zähne der Antriebsrolle weist weiterhin den Vorteil auf, dass der Profilmantel und somit die Rollenaußenseite besonders einfach zu reinigen ist, da die als Vertiefungen ausgebildeten Eingriffsabschnitte breit genug sind, um gut zugänglich für ein Reinigungsgerät zu sein.

Erfindungsgemäß beträgt die mittlere Breite der Zähne zwischen 3 mm und 7 mm und die mittlere Breite der Eingriffsabschnitte zwischen 44 mm und 48 mm. Die Breite der Zähne (in Umfangsrichtung des Mantels) kann in Achsrichtung abnehmen, die Zähne sich nach außen verjüngen. Entsprechend gegenläufig können die Eingriffsabschnitte so ausgebildet sein, dass diese sich nach außen (in Radialrichtung) verbreitern. Die mittlere Breite der Zähne beschreibt somit die durchschnittliche Breite der Zähne, gemittelt von deren Ansatz am Boden der Eingriffsabschnitte bis zum radial äußeren Zahnende. Entsprechend ist die mittlere Breite der Eingriffsabschnitte definiert.

Gemäß einem nicht beanspruchten alternativen Ausführungsbeispiel ist die mittlere Breite der Zähne breiter ausgebildet als die mittlere Breite der Eingriffsabschnitte. In diesem Ausführungsbeispiel ist die Stabilität der Zähne besonders hoch und die Zähne weisen eine hohe Lebenszeit auf.

Dabei kann die mittlere Breite der Zähne 40 mm bis 48 mm betragen und die mittlere Breite der Eingriffsabschnitte 3 mm bis 11 mm betragen.

Erfindungsgemäß sind Zahnflanken der Zähne zum Übertragen eines Drehmoments der Antriebsrolle jeweils zwischen 10° und 15° gegenüber der Radialrichtung geneigt, bevorzugt um 12° geneigt. Dabei kann die Oberfläche der Zahnflanken so ausgebildet sein, dass sie jeweils in einer Ebene liegt. Die Zahnflanken können sich kontinuierlich über die gesamte Länge der Antriebsrolle in Achsrichtung erstrecken. Durch diese Neigung der Zahnflanken gegenüber dem Lot in Radialrichtung auf die Antriebsrolle können sowohl Förderbandgurte mit abgerundeten Noppen als Eingriffelemente als auch mit steilen Eingriffelementszähnen versehene Förderbandgurt effektiv angetrieben werden. Damit ist eine solche Neigung besonders geeignet zum Betrieb mit unterschiedlichen Arten von Förderbandgurten.

Gemäß einem Ausführungsbeispiel ist die Antriebsrolle für einen Förderbandgurt mit Eingriffelementen ausgebildet, wobei die Länge der Zähne in Radialrichtung auf die Größe der Eingriffelemente des Förderbandgurts abgestimmt ist. Bevorzugt sind die Zähne des Profilmantels dabei so ausgebildet, dass die Zähne in Radialrichtung 0,5 cm - 1,5 cm, besonders bevorzugt 9,5±1 mm, über den Boden der Eingriffsabschnitte herausstehen. Eine solche Länge der Zähne, und somit eine entsprechende Tiefe der Eingriffsabschnitte, ist besonders gut auf die Dimensionierung der bislang bekannten Förderbandgurte abgestimmt, so dass die Eingriffelemente der meisten profilierten Förderbandgurte in die Eingriffsabschnitte der Antriebsrolle eingreifen, aber nicht bis auf den Grund der Eingriffsabschnitte reichen. Die Ausbildung der Zähne und der Eingriffsabschnitte derart, dass die Eingriffsabschnitte ein wenig tiefer sind als die meisten Eingriffelemente lang, weist den Vorteil auf, die Förderbandgurte ohne ein Aufwölben des Förderbandgurtes, insbesondere beim Umlenken um die Antriebsrolle, betreiben zu können.

In einer Ausführungsform ist der Profilmantel aus PUR ausgebildet. PUR steht für Polyurethane wie z.B. AXSON XP 3587/3. Dieses Material ist sehr gut zu verarbeiten, stabil und leicht zu reinigen. Insbesondere für ein Förderbandsystem zum Transport von Nahrungsmitteln ist das Reinigen der Transportanlage sehr wichtig. Ein Profilmantel aus PUR ist einfach und gründlich zu reinigen.

Die Antriebsrolle kann einen Trommelmotor zum Drehen der Antriebsrolle um ihre Längsachse aufweisen. Dabei kann der Profilmantel und der Trommelmotor kraftschlüssig und/oder formschlüssig miteinander verbunden sein. Damit wird ein effizienter Kraftübertrag vom Trommelmotor auf den Profilmantel bereitgestellt.

In einer Ausführungsform ist die Antriebsrolle mit einem antibakteriellen Additiv versehen. Ein antibakterielles Additiv ist z.B. bei Nutzung der Antriebsrolle in einer Förderanlage für Essenswaren empfehlenswert, um den Hygienestandard zu erhöhen. Eine solches antibakterielles Additiv kann z.B. auf Basis von Silberionen ausgebildet sein, das gleichmäßig in das Material der Antriebsrolle integriert ist. Der Vorteil eines Additivs gegenüber z.B. einer antibakteriellen Beschichtung ist die längere Lebensdauer.

Ein Aspekt der Erfindung betrifft ein Förderband mit zumindest einer der erfindungsgemäßen Antriebsrollen und einem Förderbandgurt, wobei die Antriebsrolle als Umlenkrolle für den Förderbandgurt ausgebildet ist. Umlenkrolle bedeutet dabei, dass der Förderbandgurt um die Antriebsrolle so herum angeordnet ist, dass sich seine Verlaufsrichtung um ca. 180° ändert. Die Umlenkrolle ist somit an einem Ende des Förderbandes bzw. eines Abschnitts des Förderbandes angeordnet.

Gemäß einem Ausführungsbeispiel ist der Zwischenabstand der Antriebsrolle größer als der Zwischenabstand des Förderbandgurts ausgebildet. Dadurch wird ein Kraftübertrag an jeweils einem Zahn der Antriebsrolle ermöglicht. Bevorzugt ist die Teilung der Antriebsrolle um zumindest 0,5 mm größer als die Teilung des Förderbandgurts, besonders bevorzugt zumindest 1,5 mm größer als die Teilung des Förderbandgurts, um elastische Verformungen des Förderbandgurts auszugleichen. Die Teilung der Antriebsrolle kann so ausgebildet sein, dass sie nicht mehr als 4,0 mm größer als die Teilung des Förderbandgurts ausgebildet ist, um einen Konflikt zwischen den Zähnen der Antriebsrolle und den Eingriffselementen der Förderbandgurts zu verhindern.

Die Erfindung wird nachfolgend von in Figuren gezeigten Ausführungsbeispielen näher beschrieben. Einzelne in den Figuren gezeigte Merkmale der Ausführungsbeispiele können mit Merkmalen anderer Ausführungsbeispiele kombiniert werden. Es zeigen:

Figur 1    in einer schematischen Darstellung einen Querschnitt durch eine Antriebsrolle zum Antrieb eines ersten Förderbandgurtes;

Figur 2    in einer schematischen Darstellung einen Querschnitt durch eine Antriebsrolle zum Antrieb eines zweiten Förderbandgurtes;

Figur 3    in einer schematischen Darstellung einen Querschnitt durch eine Antriebsrolle zum Antrieb eines dritten Förderbandgurtes;

Figur 4A    einen Querschnitt durch eine Antriebsrolle;

Figur 4B    einen vergrößerten Ausschnitt der Figur 4A mit einem Zahn der Antriebsrolle; und

Figur 5    eine Fotografie einer Antriebsrolle mit breiten Zähnen.

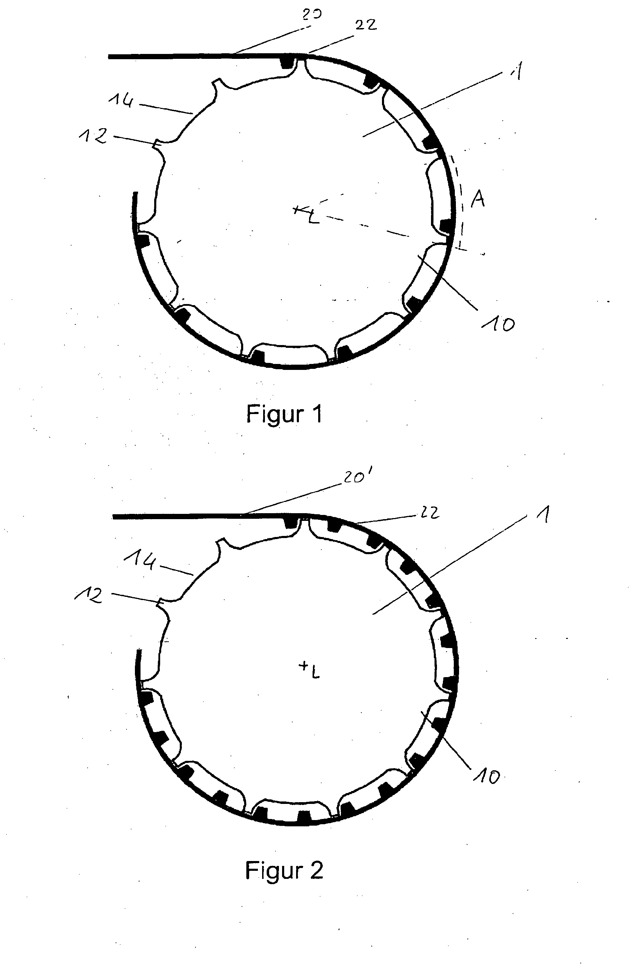

Die **Figuren 1 bis 3** zeigen in einer schematischen Darstellung einen Querschnitt durch ein Ausführungsbeispiel einer Antriebsrolle 1. Die Antriebsrolle 1 ist im Wesentlichen zylinderförmig ausgebildet und drehbar um ihre Längsachse L. Die Erstreckungsrichtung der Längsachse L definiert eine Achsrichtung der Antriebsrolle 1.

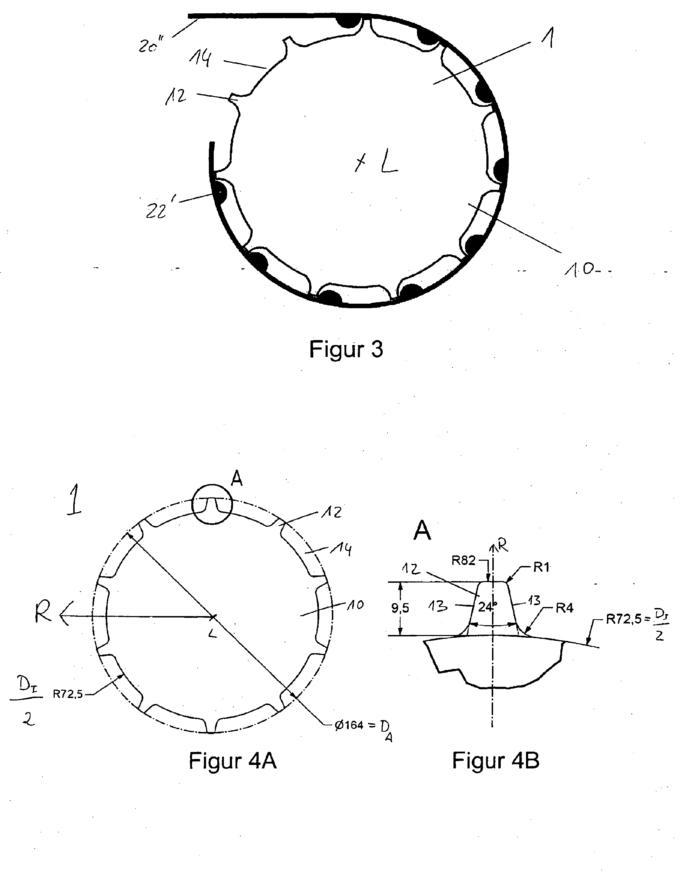

Die Antriebsrolle 1 weist einen Motor auf (in den Figuren 1 bis 3 nicht gezeigt), der die Antriebsrolle 1 so antreibt, dass sich die Antriebsrolle 1 um ihre Längsachse L dreht. Dieses Drehmoment kann zum Antreiben eines Förderbandgurtes 20 (gezeigt in Fig. 1), 20' (gezeigt in Fig. 2), 20" (gezeigt in Fig. 3) verwendet werden.

Dazu weist die Antriebsrolle 1 einen Profilmantel 10 auf, der entlang des Zylindermantels der Antriebsrolle 1 ausgebildet ist. Der Profilmantel 10 ist mit dem Motor der Antriebsrolle 1 so gekoppelt, dass ein Kraftübertrag vom Motor auf den Profilmantel 10 möglich ist: Treibt der Motor die Antriebsrolle 1 an, so dreht sich die Antriebsrolle mit dem Profilmantel 10 um ihre Längsachse L. Der Profilmantel 10 kann z.B. aus PUR (Polyurethane) ausgebildet sein. Bei Verwendung der Antriebsrolle 1 mit einem Profilmantel 10 aus PUR zum Antreiben eines Förderbandgurtes 20, 20', 20", der ebenfalls aus PUR bestehen kann, entsteht ein Gleiteffekt zwischen den beiden PUR-Materialien, der vorteilhaft für einen glatten bzw. ruckfreien Antrieb des Förderbandgurtes 20, 20', 20" ist.

Deswegen eignet sich die Antriebsrolle 1 besonders zum Antrieb eines thermoplastischen, homogenen Gurtes ("thermoplastic homogeneous belt"), die üblicherweise aus PUR oder PE hergestellt werden.

Der Profilmantel 10 weist Zähne 12 und Eingriffsabschnitte 14 auf, die an der Manteloberfläche der Antriebsrolle 1 kontinuierlich in Achsrichtung der Antriebsrolle 1 ausgebildet sind. Die Zähne 12 und Eingriffsabschnitte 14 dienen zum Übertragen des Drehmoments der Antriebsrolle 1 auf den Förderbandgurt 20, 20', 20". Dazu sind die Zähne 12 in einem regelmäßigen Abstand A von in etwa zwei Zoll zueinander ausgebildet. Der Abstand A von etwa zwei Zoll ist gemessen am Außenumfang des Mantels der Antriebsrolle.

Thermoplastische, homogene Gurte als Förderbandgurt 20, 20', 20" werden mit nach Innen gerichteten Eingriffelementen 22, 22' hergestellt. Nach Innen bedeutet dabei, dass die Eingriffelemente 22, 22' in Richtung zur Antriebsrolle 1 hin weisen, wenn der Förderbandgurt 20, 20', 20" in einer Arbeitsposition von der Antriebsrolle 1 angetrieben werden soll.

Die Form der Eingriffelemente 22, 22' ist dabei herstellerabhängig. Manche Förderbandgurte 20" weisen halbkugelförmige Noppen als Eingriffelemente 22' auf, wie in Figur 3 gezeigt. Andere Förderbandgurte 20, 20' weisen lamellenartige Eingriffelemente 22 auf, die sich entlang der gesamten Querrichtung des Förderbandgurtes 20, 20' erstrecken (vgl. Figuren 1 und 2). Die Querrichtung des Förderbandgurtes ist dabei parallel zur Achsrichtung der Antriebsrolle 1 ausgerichtet.

Förderbandgurte mit Noppen als Eingriffelemente auf Ihrer Innenseite werden mit unterschiedlichsten Abständen in Querrichtung zwischen den Noppen hergestellt. Zu deren Antrieb werden bislang Zahnräder verwendet, die genau auf die Noppenposition abgestimmte Abstände zueinander aufweisen müssen, so dass die Noppen in die Zahnräder eingreifen.

Die Antriebsrolle 1 weist Zähne 12 und Eingriffsabschnitte 14 auf, die sich kontinuierlich über die gesamte Manteloberfläche der Antriebsrolle 1 erstrecken. Daher ist es zum Antreiben eines Förderbandgurtes nicht entscheidend, an welcher Position in Achsrichtung der Antriebsrolle 1 bzw. in Querrichtung des Förderbandgurtes die Eingriffelemente angeordnet sind, um in die Eingriffsabschnitte 14 der Antriebsrolle 1 einzugreifen.

Die Antriebsrolle 1 kann zum Antrieb verschiedenster Förderbandgurte verwendet werden. Dazu sind die Zähne 12 der Antriebsrolle 1 in etwa zwei Zoll in Umfangsrichtung des Mantels voneinander beabstandet. Der Förderbandgurt 20, gezeigt in **Figur 1**, weist einen Zwischenabstand ("Pitch") zwischen seinen Eingriffelementen 22 von zwei Zoll auf. Somit können die Zähne 12 an jedem der Eingriffelemente 22 ansetzen und das Drehmoment der Antriebsrolle zum Antreiben des Förderbandgurtes 20 umsetzen.

Der in **Figur 2** gezeigte Förderbandgurt 20' weist einen Zwischenabstand von einem Zoll zwischen seinen Eingriffelementen 22 auf. Sowohl der Zwischenabstand der Eingriffelemente 22 als auch der Abstand A der Zähne 12 beträgt die Breite eines Eingriffsabschnitts plus die Breite eines Eingriffelements 22 bzw. Zahns 12. In Figur 2 liegen die Zähne 12 der Antriebsrolle 1 an jedem zweiten Eingriffelement 22 des Förderbandgurts 20' an. Ein jeweils dazwischen angeordneter Eingriffelement 22 des Förderbandgurts 20' greift zwar in den Eingriffsabschnitt 14 der Antriebsrolle 1 ein, liegt aber an keinem Zahn an und wird deswegen durch die Antriebsrolle 1 auch nicht angetrieben.

Zwischen den einzelnen Zähnen 12 der Antriebsrolle 1 sind die Eingriffsabschnitte 14 so breit (in Umfangsrichtung des Mantels) ausgebildet, dass die "dazwischen liegenden" Eingriffelemente 22 einfach mit in den Eingriffsabschnitt eingreifen können. Im Ausführungsbeispiel der Figur 2 greifen in jeden Eingriffsabschnitt 14 zwei Eingriffelemente 22 des Förderbandgurtes 20' ein. Dieser große Abstand zwischen den einzelnen Zähnen 12 der Antriebsrolle 1 verbessert die Vielseitigkeit der Antriebsrolle 1: Sowohl der Förderbandgurt 20 (gezeigt in Figur 1) als auch der Förderbandgurt 20' (gezeigt in Figur 2) kann von derselben Antriebsrolle 1 angetrieben werden. Dazu sind die Zähne 12 in Umfangsrichtung des Mantels der Antriebsrolle 1 wesentlich schmäler ausgebildet als die weiten Eingriffsabschnitte 14.

Auch die noppenartigen, halbkreisförmigen Eingriffelemente 22' des Förderbandgurts 20" (gezeigt in **Figur 3**) können von derselben Antriebsrolle 1 angetrieben werden. Die weite Ausgestaltung der Eingriffsabschnitte 14 stellt genügend Raum sowohl für ein Eingreifen der schmalen Eingriffelemente 22 (vgl. Fig. 1 und 2) als auch der breiteren Eingriffelemente 22' (vgl. Fig. 3) bereit.

Da viele thermoplastische, homogene Gurte als Förderbandgurte mit einem Zwischenabstand (Teilung) von entweder einem oder zwei Zoll hergestellt werden, aber mit sehr unterschiedlich geformten Eingriffelementen, ist die Antriebsrolle 1 zum Antrieb der meisten dieser Gurte geeignet.

So stellt z.B. die Firma Intralox entsprechende Gurte mit Zwischenabständen von 1,96849 Zoll und 1,02361 Zoll her. Auch Firmen wie Volta und MAFDEL stellen Gurte mit diesen Zwischenabständen ("Pitch") her. Andere, zumeist amerikanische Firmen, stellen entsprechende Gurte mit einer genau ein oder zwei Zoll groß ausgebildeten Teilung (Zwischenabstand) her.

Die Teilung der Antriebsrolle 1 ist ca. 1 mm bis 2 mm größer ausgebildet als die Teilung der Förderbandgurte 20, 20', 20". Deswegen erfolgt zumindest ein Großteil des Kraftübertrags von der Antriebsrolle 1 auf den jeweiligen Förderbandgurt 20, 20', 20" von einem einzigen Zahn 12 der Antriebsrolle 1 auf ein einziges Eingriffselement 22, 22' des Förderbandgurts 20, 20', 20". Löst sich dieser Hauptlastzahn aufgrund der Drehbewegung der Antriebsrolle 1 vom Förderbandgurt 20, 20', 20", so gleitet der Förderbandgurt 20, 20', 20" über die Spitzen der Zähne 12, bis ein Eingriffselement 22, 22' am nachfolgenden Zahn 12 der Antriebsrolle anschlägt und dieser Zahn vorübergehend zum neuen Hauptlastzahn der Kraftübertragung wird. **Figur 4A** zeigt einen Querschnitt durch eine Ausführungsform der Antriebsrolle 1. Um die Längsachse L der Antriebsrolle 1 ist ein im Querschnitt in etwa quadratischer Trommelmotor angeordnet (nicht gezeigt). Um den Trommelmotor herum ist der Profilmantel 10 angeordnet, der mit dem Trommelmotor formschlüssig verbunden ist.

Der Außendurchmesser $D_A$ der Antriebsrolle 1 beträgt im Ausführungsbeispiel der Figur 4A 164 mm, wobei dieser Außendurchmesser die Länge der Zähne 12 einschließt. Der Innendurchmesser $D_I$ ist ein Maß für den Durchmesser der Antriebsrolle 1 bis zum Boden der Eingriffsabschnitte 14 und beträgt 145 mm. Die Zahnlänge beträgt somit 9,5 mm. Das in Figur 4A gezeigte Ausführungsbeispiel weist zehn Zähne 12 und zehn Eingriffsabschnitte 14 auf.

Damit ergibt sich der Abstand A aus dem Außendurchmesser $D_A$ mal $\pi$ durch Anzahl der Zähne $N_z$:

$$\frac{D_A \bullet \pi}{N_z} = \frac{164\,\text{mm} \bullet \pi}{10} \approx 51{,}52\,\text{mm}\,.$$

Andere Ausführungsbeispiele betreffen z.B. Antriebsrollen mit einem Außendurchmesser $D_A$ von 114,8 mm, 147,6 mm, 164 mm und 196,8 mm mit jeweils 7, 9, 10 bzw. 12 Zähnen. Damit weisen alle diese Ausführungsbeispiele einen Abstand A von ca. 51,52±1,5 mm auf.

**Figur 4B** zeigt in einem vergrößerten Ausschnitt aus der Figur 4A einen Zahn 12. Der Zahn 12 ragt um 9,5 mm aus den Eingriffsabschnitten 14 heraus, bzw. die Eingriffsabschnitte 14 sind 9,5 mm tief im Profilmantel 10 ausgebildet. Zahnflanken 13 des Zahns 12 sind um jeweils 12° zur Radialrichtung R geneigt. Mit dieser winklig geneigten Ausbildung sind die Zahnflanken 13 besonders gut geeignet, die Vielzahl von verschieden geformten Eingriffelementen der Förderbandgurte zum Kraftübertrag zu nutzen. Aufgrund dieser Neigung der Zahnflanken 13 werden die Zähne 12 nach außen in Radialrichtung R schmäler.

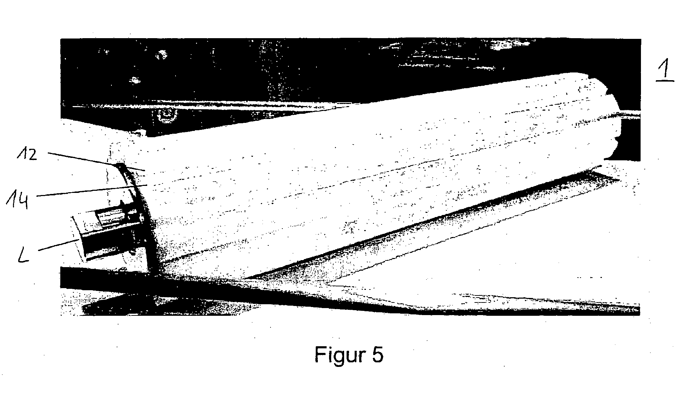

**Figur 5** zeigt eine Fotografie einer Ausführungsform einer Antriebsrolle 1, bei der die Zähne breiter als die Eingriffsabschnitte ausgebildet sind. Der Abstand A zwischen den Zähnen beträgt auch bei dieser Ausführungsform ca. zwei Zoll. Die Eingriffsabschnitte 14 der in Figur 5 gezeigten Antriebsrolle 1 sind breit genug, um sowohl den schematisch in Figur 1 gezeigten Förderbandgurt 20, als auch den in Figur 3 gezeigten Förderbandgurt 20" mit Noppen als Eingriffelemente 22' anzutreiben.

**Bezugzeichenliste**

| | |
|---|---|
| 1 | Antriebsrolle |
| 10 | Profilmantel |
| 12 | Zahn |
| 14 | Eingriffsabschnitt |
| 20 | Förderbandgurt |
| 20' | Förderbandgurt |
| 20" | Förderbandgurt |
| 22 | Eingriffelement |
| 22' | Eingriffelement |
| A | Abstand |
| $D_A$ | Außendurchmesser |
| $D_I$ | Innendruchmesser |
| L | Längsachse |
| $N_z$ | Anzahl der Zähne |
| R | Radialrichtung |

**Patentansprüche**

**1.** Antriebsrolle für einen Förderbandgurt mit einem Profilmantel (10), in dem entlang der Achsrichtung der Antriebsrolle (1) Zähne (12) und Eingriffsabschnitte (14) so ausgebildet sind, dass gilt:

$$\frac{D_A \bullet \pi}{N_z} = 52{,}0\,\text{mm} \pm 2\,\text{mm}\,;$$

wobei

- $D_A$ den Außendurchmesser der Antriebsrolle (1) mit Zähnen (12) bezeichnet und Nz die Anzahl der Zähne (12) des Profilmantels (10) bezeichnet,
- die Antriebsrolle im Wesentlichen zylinderförmig ausgebildet ist und die Antriebsrolle in Richtung Zylinderachse länger ausgebildet ist als in Richtung des Zylinderdurchmessers,
- die mittlere Breite der Zähne (12) zwischen 3 mm und 7 mm beträgt und die mittlere Breite der Eingriffsabschnitte (14) zwischen 44 mm und 48 mm beträgt und
- Zahnflanken (13) der Zähne (12) zum Übertragen eines Drehmoment der Antriebsrolle (1) jeweils zwischen 10° und 15° gegenüber der Radialrichtung (R) geneigt sind.

2. Antriebsrolle nach Anspruch 1, wobei die Zähne (12) und die Eingriffsabschnitte (14) im Wesentlichen entlang der gesamten Mantellänge der Antriebsrolle (1) ausgebildet sind.

3. Antriebsrolle nach einem der vorangegangenen Ansprüche, wobei die Zähne (12) in Radialrichtung (R) 0,5 cm - 1,5 cm über den Boden der Eingriffsabschnitte (14) herausstehen.

4. Antriebsrolle nach einem der vorangegangenen Ansprüche, wobei der Profilmantel (10) aus PUR ausgebildet ist.

5. Antriebsrolle nach einem der vorangegangenen Ansprüche, wobei die Antriebsrolle (1) einen Trommelmotor zum Drehen der Antriebsrolle (1) um ihre Längsachse (L) aufweist.

6. Antriebsrolle nach Anspruch 5, wobei der Profilmantel (10) und der Trommelmotor kraftschlüssig und/oder formschlüssig miteinander verbunden sind.

7. Förderband mit zumindest einer Antriebsrolle (1) nach einem der vorangegangenen Ansprüche und einem Förderbandgurt (20; 20'; 20"), wobei die Antriebsrolle (1) als Umlenkrolle für den Förderbandgurt (20; 20'; 20") ausgebildet ist.

8. Förderband nach Anspruch 7, wobei der Förderbandgurt (20; 20'; 20") im Wesentlichen so breit ausgebildet ist, wie sich die Antriebsrolle (1) in Achsrichtung erstreckt.

9. Förderband nach einem der Ansprüche 7 oder 8, wobei der Zwischenabstand der Antriebsrolle (1) größer als der Zwischenabstand des Förderbandgurts (20; 20'; 20") ausgebildet ist.

10. Förderband nach einem der Ansprüche 7 bis 9, wobei die Zähne (12) der Antriebsrolle (1) Zahnflanken (13) aufweisen, die zum Übertragen einer Kraft aus einem Drehmoment der Antriebsrolle (1) auf in den Eingriffsabschnitten (14) angeordnete Eingriffelemente (22; 22') des Förderbandgurts (20; 20'; 20") ausgebildet sind.

11. Förderband nach einem der Ansprüche 7 bis 10, wobei das Material des Profilmantels (10) gegenüber dem Material des Förderbandgurts (20; 20'; 20") einen geringen Reibungskoeffizienten aufweist.

12. Förderband nach einem der Ansprüche 7 bis 11, wobei die Länge der Zähne (12) der Antriebsrolle (1) in Radialrichtung (R) auf die Größe von Eingriffelementen (22; 22') des Förderbandgurts (20; 20'; 20") abgestimmt ist.

**Claims**

1. A transport roller for a band conveyor belt having a profile barrel (10) including teeth (12) and engagement sections (14) being formed along the axis direction of the transport roller (1), such that

$$\frac{D_A \cdot \pi}{N_Z} = 52.0 \; mm \pm \; 2 \; mm$$

is satisfied, wherein

- $D_A$ designates the outer diameter of the transport roller (1) having teeth (12) and Nz designates the number of teeth (12) of the profile barrel (10),
- the transport roller is essentially formed cylindrically and the transport roller being formed longer in the direction of the cylinder axis than in the direction of the cylinder diameter,
- the average width of the teeth (12) is between 3 mm and 7 mm and the average width of the engagement portions (14) is between 44 mm and 48 mm, and
- teeth flanks (13) of the teeth (12) for transmitting torque to the transport roller (1) each being inclined between 10° and 15° in respect to the radial direction (R).

2. The transport roller according to claim 1, wherein the teeth (12) and the engagement portions (14) are essentially formed along the whole barrel length of the transport roller (1).

3. The transport roller according to any of the previous claims, wherein the teeth (12) radially (R) project by 0.5 cm - 1.5 cm above the bottom of the engagement portions (14).

4. The transport roller according to any of the previous claims, wherein the profile barrel (10) is formed from PUR.

5. The transport roller according to any of the previous claims, wherein the transport roller (1) comprises a drum motor for rotating the transport roller (1) around its longitudinal axis (L).

6. The transport roller according to claim 5, wherein the profile barrel (10) and the drum motor are frictionally and/or positively connected to each other.

7. A band conveyor having at least one transport roller (1) according to any of the preceding claims and a band conveyor belt (20; 20'; 20"), wherein the transport roller (1) is formed as an idler pulley for the band conveyor belt (20; 20'; 20").

8. The band conveyor according to claim 7, wherein the band conveyor belt (20; 20'; 20") is essentially formed as wide as the transport roller (1) extends in the axial direction.

9. The band conveyor according to claim 7 or 8, wherein the interspace of the transport roller (1) is formed bigger than the interspace of the band conveyor belt (20; 20'; 20").

10. The band conveyor according to any of claims 7 to 9, wherein the teeth (12) of the transport roller (1) comprise teeth flanks (13) being formed for transmitting power from a torque of the transport roller (1) to engagement members (22; 22") being arranged on the engagement portions (14) of the band conveyor belt (20; 20'; 20").

11. The band conveyor according to any of claims 7 to 10, wherein the material of the profile barrel (10) comprises a lower friction coefficient compared to the material of the band conveyor belt (20; 20'; 20").

12. The band conveyor according to any of claims 7 to 11, wherein the radial (R) length of the teeth (12) of the transport roller (1) is adapted to the size of engagement members of engagement portions (22; 22') of the band conveyor belt (20; 20'; 20").

**Revendications**

1. Rouleau d'entraînement pour une courroie de bande transporteuse avec une enveloppe de profil (10), dans laquelle des dents (12) et des sections d'engrènement (14) sont réalisées le long de la direction axiale du rouleau d'entraînement (1) de sorte qu'est valable :

$$\frac{D_A \bullet \pi}{N_Z} = 52,0 \text{ mm} \pm 2 \text{ mm} ;$$

dans laquelle

- $D_A$ désigne le diamètre externe du rouleau d'entraînement (1) avec des dents (12) et Nz désigne le nombre de dents (12) de l'enveloppe de profil (10),
- le rouleau d'entraînement est essentiellement réalisé en forme de cylindre et le rouleau d'entraînement est réalisé pour être plus long en direction de l'axe du cylindre qu'en direction du diamètre du cylindre,
- la largeur moyenne des dents (12) est comprise entre 3 mm et 7 mm et la largeur moyenne des sections d'engrènement (14) est comprise entre 44 mm et 48 mm, et
- des flancs de dent (13) des dents (12) sont inclinés pour transférer un couple de rotation du rouleau d'entraînement (1) à chaque fois entre 10° et 15° par rapport à la direction radiale (R).

2. Rouleau d'entraînement selon la revendication 1, dans lequel les dents (12) et les sections d'engrènement (14) sont réalisées essentiellement le long de la longueur d'enveloppe totale du rouleau d'entraînement (1).

3. Rouleau d'entraînement selon une des revendications précédentes, dans lequel les dents (12) font saillie dans la direction radiale (R) de 0,5 cm à 1,5 au-dessus du fond des sections d'engrènement (14).

4. Rouleau d'entraînement selon une des revendications précédentes, dans lequel l'enveloppe de profil (10) est réalisée en PUR.

5. Rouleau d'entraînement selon une des revendications précédentes, dans lequel le rouleau d'entraînement (1) présente un moteur-tambour pour la rotation du rouleau d'entraînement (1) autour de son axe longitudinal (L).

6. Rouleau d'entraînement selon la revendication 5, dans lequel l'enveloppe de profil (10) et le moteur-tambour sont reliés l'un à l'autre par adhérence et/ou par conjugaison de formes.

7. Bande transporteuse avec au moins un rouleau d'entraînement (1) selon une des revendications précédentes et une courroie de bande transporteuse (20 ; 20' ; 20"), dans laquelle le rouleau d'entraînement (1) est réalisé en tant que poulie de renvoi pour la courroie de bande transporteuse (20 ; 20' ; 20").

8. Bande transporteuse selon la revendication 7, dans laquelle la courroie de bande transporteuse (20 ; 20' ; 20") est réalisée pour être essentiellement aussi large que l'étendue du rouleau d'entraînement (1) dans la direction axiale.

9. Bande transporteuse selon une des revendications 7 ou 8, dans laquelle l'écart intermédiaire du rouleau d'entraînement (1) est réalisé pour être supérieur à l'écart intermédiaire de la courroie de bande transporteuse (20 ; 20' ; 20").

10. Bande transporteuse selon une des revendications 7 7 9, dans laquelle les dents (12) du rouleau d'entraînement (1) présentent des flancs de dent (13) qui sont réalisés pour le transfert d'une force provenant d'un couple de rotation du rouleau d'entraînement (1) sur des éléments d'engrènement (22 ; 22') disposés dans les sections d'engrènement (14) de la courroie de bande transporteuse (20 ; 20' ; 20").

11. Bande transporteuse selon une des revendications 7 à 10, dans laquelle le matériau de l'enveloppe de profil (10) présente un faible coefficient de frottement par rapport au matériau de la courroie de bande transporteuse (20 ; 20' ; 20").

12. Bande transporteuse selon une des revendications 7 à 11, dans laquelle la longueur des dents (12) du rouleau d'entraînement (1) dans la direction radiale (R) est adaptée à la taille d'éléments d'engrènement (22 ; 22') de la courroie de bande transporteuse (20 ; 20' ; 20").

Figur 1

Figur 2

Figur 3

Figur 4A          Figur 4B

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1983222 A2
- EP 2065318 A1
- US 2004089519 A1
- WO 2005009874 A2
- EP 1816091 A
- WO 2004009476 A